# EUROPEAN PATENT APPLICATION

(11) **EP 3 970 478 A1**
(43) Date of publication of application: **23.03.2022**
(21) Application number: 20197438.3
(22) Date of filing: 22.09.2020
(51) Int. Cl.: A01G 31/06, A01G 9/24, A01G 27/02, A01G 31/04

(54) **PLANT CONTAINMENT DEVICE, PLANT GROWING SYSTEM AND METHOD FOR GROWING PLANTS**

(71) Applicant: Mana Farms GmbH, 04179 Leipzig (DE)
(72) Inventor: DASER, Richard, 04229 Leipzig (DE); SCHARDT, Raphael, 96268 Mitwitz (DE)
(74) Representative: Seemann & Partner Patentanwälte mbB

(57) **Abstract**

The invention relates to a plant containment device (200) for vertical farming. The plant containment device (200) comprises a plant holding compartment (202) to hold at least one plant (50) and an irrigation compartment (204) adjacent to the plant holding compartment (202). The plant containment device (200) further comprises a light source (203), wherein the irrigation compartment (204) is configured to cool the at least one light source (203).

## Description

The invention relates to a plant containment device for vertical farming comprising a plant holding compartment to hold at least one plant and an irrigation compartment adjacent to the plant holding compartment.

The invention further relates to plant growing system for vertical farming and a method for growing plants with a plant growing system for vertical farming.

With the introduction of artificial fertilizers and pesticides to agriculture, an enormous increase in productivity has become possible. However, this comes at the expense of the environment. The result is huge monocultures, which are kept sterile by pesticides.

Furthermore, traditional agriculture is characterized by an extremely inefficient logistics system, as agriculture products are often transported over long distance.

The transport, the use of pesticides and excessive water consumption quickly are major downsides of traditional agriculture, especially in the cultivation of plants with high water content. A solution to this problem is on the one hand the cultivation in several, vertically stacked levels, known as vertical farming, and on the other hand the cultivation in a closed, optimized and controllable environment, known as controlled environment agriculture (CEA).

In the first stages of experimentation with vertical farming it was difficult to grow food for the same or a lower price than with traditional farming methods. Nowadays there are now some types of vegetables that can now be produced much cheaper in a vertical farm compared to a traditional farm. On the one hand this is due to the optimization of vertical farm systems, on the other hand this can be attributed to an improved efficiency of LEDs as light sources and the availability of cheap ecological electricity.

One central problem of vertical and indoor farms, or CEA in general, is the heat management of the system. It is a major challenge when constructing CEA facilities and devices. Due to artificial light sources and high light intensity demands of certain plants as well as vertical or narrow stacking, power densities are high, usually in the range of 300-700 W/m³. Most systems use air cooling for the light sources. To control the temperature and humidity in the controlled environment as well as removing the heat from the light sources most CEA facilities or devices utilize air based heating, ventilation, and air conditioning (HVAC) heat pumps, which are also known as air conditioners.

Air in contrast to water has quite a low heat capacity, especially per volume, and a 50 times lower heat conductivity. Therefore to efficiently remove a lot of power thermally in a confined, small space like a vertical farm, a lot of air has to be moved fast. This is not ideal for a plant containment and growing system.

In WO 2017/087644 A1 a water-cooled LED lighting system for indoor farming is shown. This system comprises a lighting housing with a LED board and a coolant passage for a coolant liquid, which provides active cooling for the LED board.

It is the object of the present invention to provide a way to manage the heat in a vertical farming system with reduced complexity and operational expenses, while improving the growing environment for the plants.

This object is solved by a plant containment device for vertical farming comprising a plant holding compartment to hold at least one plant and an irrigation compartment adjacent to the plant holding compartment, wherein the plant containment device further comprises a light source, wherein the irrigation compartment is configured to cool the at least one light source.

The irrigation compartment is shaped to hold a liquid working medium (LWM). The liquid working medium is in particular a nutrient solution and/or water and/or glycerine and/or alcohol and/or a disinfectant. Advantageously, according to the invention the same liquid working medium that supplies the plants, e.g. with nutrients, is used to cool the at least one light source through heat exchange between the light source and the liquid working medium. Of course, in case that the light source is cooler than the liquid working medium, e.g. when the light source has not been switched on for some time, the light source might be heated up instead of cooled by the liquid working medium.

The light source is in thermal contact and in particular adjacent to the at least one irrigation compartment. This ensures that heat from the light source is dissipated efficiently by the liquid working medium.

In particular, the irrigation compartment is configured to cool and/or heat the air outside the plant containment device. In particular, at least one of the walls of the irrigation compartment forms an outer hull of the plant containment device. In this way the liquid working medium inside the irrigation compartment is used to regulate the temperature of the outside air.

The plant containment device is in particular a tray, a pot, a bucket, a tub or a similar container for plants. In particular, the thickness of a wall of the irrigation compartment adjacent to the light source and/or a wall of the irrigation compartment, which forms an outer hull of the plant containment device, is at most 1mm, in particular at most 0,5mm. This ensures that enough heat is conducted through the wall, even if a material with low thermal conductivity is used for the wall, for example PVC. In this way, heat is dissipated from the light sources and the air outside the plant containment device is cooled. In particular, the light source is arranged on a thermal spreader consisting of a thermal conductive material, for example metal. In particular, the thermal spreader is a plate comprising aluminium. In particular, the thermal spreader comprises an aluminium housing and FR-4 material.

In particular, the plant containment device has a trough shaped cross-section. The plant holding compartment has in particular a root chamber at its bottom.

According to an embodiment of the invention, the irrigation compartment is separated from the plant holding compartment by a wall. According to an alternative embodiment, the irrigation compartment is shaped as a single chamber with the plant holding compartment.

Preferably, the irrigation compartment comprises at least one irrigation channel arranged between an outer hull and an inner hull of the plant containment device.

Advantageously, through this irrigation channel the liquid working medium comes into contact with the outer hull, which allows for a heat exchange between the liquid working medium and air outside of the outer hull. Air flowing past the outer hull will thus be cooled or heated by the liquid working medium. This allows for the regulation of the air temperature without the need for an air cooling or heating HVAC.

The plant holding compartment is in particular adjacent to the inner hull. As the liquid working medium comes into contact with the inner hull, a plant and/or substrate in the plant holding compartment adjacent to the inner hull will be cooled or heated by the liquid working medium. Thus, the temperature of the plant and/or substrate can be regulated by the liquid working medium.

Preferably, the irrigation compartment comprises at least two irrigation channels, wherein the light source is arranged in between two of the irrigation channels, wherein in particular a barrier facing, and in particular surrounding, the light source is arranged on the bottom of each of the two irrigation channels.

By arranging the light source in between two irrigation channels, the heat of the light source can be dissipated very efficiently. The barrier is a water protection barrier to protect the light source from water condensating on the bottom of the irrigation channels. Alternatively, the light source is arranged adjacent to a single irrigation channel. In this case, the barrier is arranged on the bottom of the single irrigation channel facing, and in particular surrounding, the light source.

Preferably, the irrigation compartment comprises at least two irrigation channels, wherein the at least two irrigation channels are separated from each other and run parallel to each other along a longitudinal axis of the plant containment device.

This design of the irrigation channels ensures an excellent supply of the liquid working medium to roots of the at least one plant, while at the same time dissipating the heat of the at least one light source. The at least one light source extends in particular along the longitudinal axis.

In particular the plant containment device comprises a backside sealing and/or a front sealing to distribute the liquid working medium inside the irrigation channels.

According to an embodiment, the at least one light source is fixed to a bottom side of the plant containment device, wherein in particular the at least one light source only emits light away from the plant containment device.

According to this embodiment, the light source is fixed to the bottom side of a first plant containment device and provides light for a plant in a second plant containment device, arranged below the first containment device. In other words, every plant containment device provides light for plant containment devices on lower levels instead of providing their own light. The light from the light source only illuminates an area below the plant containment device and not its own plant holding compartment. This allows for a very efficient and compact vertical farming arrangement. Of course, the plants on the highest level need to be supplied with light from a separate light source and the plant containment device on the lowest level does not need to comprise a light source.

Preferably, the plant containment device comprises a docking station configured for data transfer and/or for transfer of electricity and/or as an inlet and/or outlet for at least one fluid, in particular a liquid working medium and/or water and/or air, wherein in particular the docking station contains at least one valve to open and close the inlet and/or outlet for the at least one fluid.

The docking station may contain a dam to stop the liquid working medium from pouring out when the plant containment device is uncoupled. In particular, the plant containment device is tilted before uncoupling the docking station to let the liquid working medium flow away from the docking station and avoid spilling.

The docking station provides an efficient way to supply fluids, electricity and/or data to the plant containment device. In particular, the docking station can be plugged or unplugged from a port by a friction lock system and/or a snap-lock system and/or a magnetic coupling system. In particular, the docking station is integrated into the backside sealing and/or the front sealing.

The object is further solved by a plant growing system for vertical farming, comprising at least one plant containment device, in particular according to one of the before mentioned embodiments, at least one light source arranged to illuminate the at least one plant containment device, a reservoir configured to hold at least one liquid working medium, at least one pump and a distributor device, wherein the at least one pump is configured to pump the liquid working medium from the reservoir to the distributor device, from the distributor device to at least one fluid compartment and from the at least one fluid compartment back to the reservoir, wherein at least one of the fluid compartments is an irrigation compartment of the at least one plant containment device and at least one of the fluid compartments is configured to cool the at least one light source.

The plant growing system incorporates the same features, advantages and properties as the inventive plant containment device.

The liquid working medium is transported in a, in particular closed, irrigation cycle. The liquid working medium supplies the plants, e.g. with nutrients and water, and regulates the temperature of the system by dissipating thermal energy of the at least one light source. In other words, the same liquid working medium that is used to supply the plants is also used to cool the at least one light source. This constitutes a very compact and efficient design, as there is no need for separate cycles for supplying the at least one plant and cooling the at least one light source.

In particular, the plant growing system is a controlled environmental agriculture. The fluid compartment, which is in thermal contact with the at least one light source, is in particular adjacent to the at least one light source. In this way, the at least one light source is cooled very efficiently. The distribution device is in particular configured to distribute the liquid working medium to at least two different fluid compartments.

In particular, the system comprises at least two reservoirs. Each reservoir may be filled with a different liquid working medium. In particular, each reservoir is connected to a separate irrigation cycle.

According to an embodiment of the invention, the system is realised with a top layer, that contains at least one light source, at least one middle layer, which contains at least one plant containment device with at least one light source each at the bottom of the plant containment device, and a bottom layer, which contains at least one plant containment device without a light source. In particular, all the light sources are cooled with the liquid working medium. This embodiment is really compact, as the illumination for the layers is provided by the layer above, thus avoiding the need for separate lighting structures for each layer.

Preferably, the system comprises a cooling device configured to cool the liquid working medium, wherein at least one of the pumps is configured to pump the liquid working medium to the cooling device and from the cooling device to the reservoir, wherein in particular the system further comprises a temperature management device and a temperature sensor, wherein the temperature sensor is configured to measure the temperature of the liquid working medium and wherein the temperature management device is configured to receive temperature data from the temperature sensor and control the cooling device to regulate the temperature of the liquid working medium inside the reservoir to a specified temperature.

The cooling device regulates the temperature of the liquid working medium and ensures, that the temperature of the liquid working medium does not rise too much by absorbing the thermal energy from the at least one light source, the surrounding air, the plant and/or plant substrate. This is important, because at higher temperatures the oxygen carrying capacity of the liquid working medium decreases. Thus, cooling the liquid working medium prevents damage to the roots of the at least one plant.

The at least one pump, the cooling device and the reservoir form in particular a cooling cycle. This cooling cycle is in particular parallel to the cooling and irrigation cycle.

In particular, the cooling device comprises a compressor based heat pump and/or a heat exchanger and/or an absorption based heat pump and/or a peltier heat pump. In particular, the cooling device comprises a heat exchanger and is coupled with a HVAC. The HVAC supplies cold water to the heat exchanger.

The cooling device may be the temperature management device or may be part of the temperature management device. In particular, the temperature management device also controls ventilators and/or a HVAC to regulate the air temperature and/or the air humidity. The temperature management device is in particular a temperature management system, which may consist of many different components.

Preferably, the system comprises a grow control device with a master controller, at least one environmental sensor and a database with environmental data, wherein the grow control device is configured to measure a value of at least one environmental condition with the at least one environmental sensor and control the at least one light source and the distributor to regulate the light, water and/or nutrients received by individual plants in the at least one plant containment device according to a comparison of the measured value of the at least one environmental condition with the environmental data, wherein in particular the grow control device controls the at least one light source and the distributor according to an algorithm, which is optimized by machine learning.

The master controller comprises for example a central processing unit or a microcontroller unit and is in particular configured to communicate with other devices wirelessly, for example via WIFI and/or Bluetooth and/or radio frequency and/or near-field communication. The database can be a built-in database or a cloud database.

In particular, the grow control device replicates different environmental conditions by using the environmental data to control the at least one light source, the distributor, and in particular the cooling device and/or a HVAC to control the air humidity, the light, the water temperature and the air temperature. The grow control device is in particular configured to allocate plants dynamically to the at least one plant containment device to optimize growth of the plants. The grow control device is in particular a grow control system, which may consist of many different components.

In particular, the system comprises a control device configured to control and regulate other devices of the system. The control device comprises a master controller, which can be the same master controller as the master controller of the grow control device or a separate master controller.

According to an embodiment, the system comprises a water mixing device connected with the reservoir, wherein the water mixing device comprises at least one substance container and at least one liquid property sensor configured to measure at least one property of the liquid working medium, in particular a pH and/or an electrical conductivity, wherein the water mixing device is configured to measure a value of the at least one property of the liquid working medium with the at least one liquid property sensor and add at least one substance from the at least one substance container to the liquid working medium, if the value is outside a specified range.

The water mixing device ensures, that the liquid properties of the liquid working medium are always inside a specified range. The at least one substance is in particular a liquefied fertilizer and/or a pH down substance, e.g. phosphoric acid, and/or a pH up substance and/or a pathogen, e.g. hydrogen peroxide. The water mixing device is in particular a water mixing system, which may consist of many different components.

The water mixing device may automatically measure the value of the at least one property of the liquid working medium and automatically add the at least one substance to the liquid working medium. Alternatively, measuring the value and/or adding the at least one substance is done manually. In both cases, the system calculates the required quantity of the at least one substance based on the measured value.

According to an embodiment, the system comprises an autonomous actuation device, in particular a robot and/or a conveyor and/or a transfer rail, wherein the autonomous actuation device is configured to move the plant containment devices and/or harvest and move plants.

The autonomous actuation device automates many tasks inside the system. In particular, it is configured to automatically pick up, hold, move, detach and/or attach the plant containment devices. The autonomous actuation device may also be configured to sow, harvest and serve plants to customers.

Preferably, the system comprises a directable lighting device comprising the at least one light source, wherein the directable lighting device is configured to control the at least one light source to illuminate at least one plant in the at least one plant containment device with a specified light intensity and/or a specified light spectrum according to lighting data specified for the at least one plant and/or at least one type of plant.

In particular, the directable lighting device is controlled according to lighting data, also called a light recipe, for a specific growth of a specific plant. The lighting data is saved in a database, in particular the database of the grow control device. The directable lighting device consists in particular of light sources with different spectral composition, e.g. white LEDs with different correlated color temperature (CCT) and/or colored LEDs.

Preferably, the at least one light source is used as a heat source for the at least one plant containment device it is part of or attached to. In this way, the environmental temperature can be regulated without the need for an additional heating device. In particular, the regulation of the environmental temperature can be combined with the control of the temperature of the liquid working medium via the cooling device.

The system comprises in particular at least one cover, which covers at least one of the plant containment devices, in particular laterally. The at least one cover creates a closed environment for the at least one plant containment device, when the at least one cover is closed. Advantageously, by creating a closed environment the cover reduces the volume of the environmental air to be cooled or heated by the liquid working medium.

According to an embodiment, the system is configured to highlight a plant containment device containing plants, which are ready to be harvested, by individually lighting the plant containment devices and/or to dim a particular light source when the cover covering a plant containment device with the particular light source and/or a lighting device with the particular light source is opened.

Highlighting harvestable plants saves time when searching for fully grown plants, which are ready to be harvested. In particular, the light is dimmed when a door to a room containing the at least one light source is opened is opened. Dimming the light prevents the person from being blinded by high light intensities. The highlighting of harvestable plants and/or dimming of the at least one light source is in particular controlled by the directable lighting device.

According to an embodiment, the system comprises a directable ventilation device, in particular a directable ventilation system. The directable ventilazion system is configured to control the air flow to optimized the plant growth. The directable ventilation device is configured to stop or dim the air flow in vicinity to a plant containment device, when a user approaches the plant containment device. In particular, the directable ventilation device is configured to stop or dim the air flow in vicinity to a plant containment device, when a door to a room containing the plant containment device is opened or a cover on the plant containment device is lifted.

According to a further embodiment, the system comprises a seedling box to grow seedlings. In particular, the seedling box comprises a inlet to supply the liquid working medium into the seedling box and a siphon to drain the liquid working medium. The seedling box is configured to rise and lower the liquid working medium level in the seedling box to realize an ebb and flow irrigation of the seedlings.

In particular, the system comprises a waste management device, which comprises sensor to detect rotten plants, wherein the waste management device is configured to remove rotten plants detected by the sensor, in particular with the autonomous actuation device.

The system further comprises in particular a water inlet to supply fresh water into the reservoir and/or a water drainage device with a water outlet to remove waste water or waste fluid from the reservoir. In particular, at least one filter is arranged in the irrigation cycle and/or the cooling cycle.

According to an embodiment, the system comprises a user interface, for example a touchscreen. The user interface is configured to display instructions and/or information about the system or the plants and/or provide a user input interface. In particular, the user interface provides the user a purchase interface, which allows the user to buy plants grown in the system. The purchased plants are in particular delivered to the user by the autonomous actuator device.

The object is further solved by a method for growing plants with a plant growing system for vertical farming, in particular with a system according to one of the previously described embodiments, wherein a liquid working medium is guided through an irrigation compartment of a plant containment device and wherein the same liquid working medium is guided through a fluid compartment, which is configured to cool at least one light source.

The method for growing plants incorporates the same features, advantages and properties as the inventive plant growing system and the inventive plant containment device.

According to an embodiment of the method, a growth of at least one of the plants is controlled by an algorithm regulating the air humidity and/or air temperature and/or liquid working medium temperature and/or light intensity and/or light spectrum of an environment of the plant, wherein the algorithm is optimized by machine learning using feedback information, in particular the size, the weight, the appearance and/or the taste of the plant.

By implementing an algorithm optimized by machine learning the plants can be specifically adapted to the needs of specific plants. The feedback information are utilized to continuously improve the algorithm, developing optimized lighting, optimized air flows, optimized temperatures and/or optimized humidity levels for each plant. In particular, the feedback information is inputted by a user in a user interface.

In particular, plant biographies are used as input data to improve the algorithm. Plant biographies include data about the growth, size, coloration and other parameters at different points in time.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: a schematic view of an embodiment of a plant growing system for vertical farming,
- Fig. 2a: a schematic view of a lighting device with a light source,
- Fig. 2b: a schematic cross-sectional view of an embodiment of a plant containment device for vertical farming with a light source,
- Fig. 2c: a schematic cross-sectional view of a backside sealing of a plant containment device,
- Fig. 2d: a schematic cross-sectional view of a front sealing of a plant containment device,
- Fig. 3: a schematic side view of an embodiment of a plant containment device,
- Fig. 4: a schematic view of a seedling box,
- Fig. 5: a schematic view of an irrigation cycle and a cooling cycle of an embodiment of a plant growing system for vertical farming,
- Fig. 6: a schematic view of an electrical system of an embodiment of a plant growing system for vertical farming.

In the drawings, the same or similar types of elements or respectively corresponding parts are provided with the same reference numbers in order to prevent the item from needing to be reintroduced.

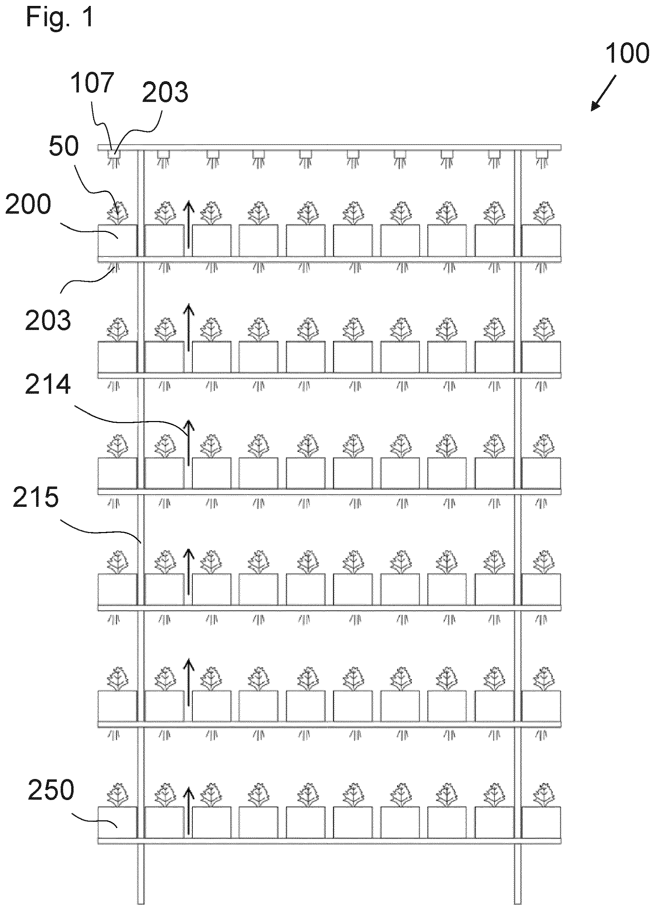

Fig. 1 shows a schematic view of an embodiment of a plant growing system 100 for vertical farming, that utilizes in particular controlled environment agriculture and may use techniques such as hydroponics, aeroponics, fogponics and/or aquaponics. The plant growing system 100 comprises a number of plant containment devices 200, which are configured to hold at least one plant 50 each. In order to supply the plants 50 with water and nutrients, one or more liquid working media, e.g. a nutrient solution, water, glycerine and/or alcohol are delivered to the plants 50.

The of plant containment devices 200 are arranged in a number of vertical layers and, in this embodiment, in a number a horizontal layers by a frame 215. The layers can be categorized into a top layer, a number of middle layers and a bottom layer. The plant containment devices 200 in the middle layers each comprise a light source 203, e.g. a LED, arranged at the bottom side to illuminate the plants 50 held in the plant containment devices 200 below. Only the plant containment devices 250 at the bottom layer do not comprise a light source 203, as there are no plants below the bottom level to be illuminated. The top layer does not comprise plant containment devices 200, but instead a number of lighting devices 107 with light sources 203 to illuminate the plants 50 at the layer below.

For the sake of clarity, only one plant containment device 200, one plant containment device 250 without a light source 203, one plant 50, one lighting device 107 and two light sources 203 are indicated with reference signs.

As the light sources 203 must have a high light intensity in order to provide enough light for the plants 50, the light sources 203 will produce a lot of heat. In order to cool the light sources 203, the same liquid working medium, which supplies the plants 50 with water and nutrients, is used to dissipate the heat generated by the light sources 203. This is achieved by guiding the liquid working medium through fluid compartments in the lighting devices 107 and by arranging the irrigation compartment close to the light sources 203 in the plant containment devices 200.

The plant containment devices 200, 250 may be laterally covered by a cover (not shown). In Fig. 1, the cover extends in the image plane. Together with the frame 215, the cover creates a closed environment for a number of plant containment devices 200, 250. In the example shown in Fig. 1, the closed environment contains forty-eight plant containment devices 200, 250 in eight rows and six layers. The air temperature inside the closed environment is regulated by the liquid working medium. This is done by heat transfer between the liquid working medium inside the fluid compartments and irrigation compartments on the one hand and an air flow 214 outside the plant containment devices 200, 250 and the lighting devices 107 on the other hand.

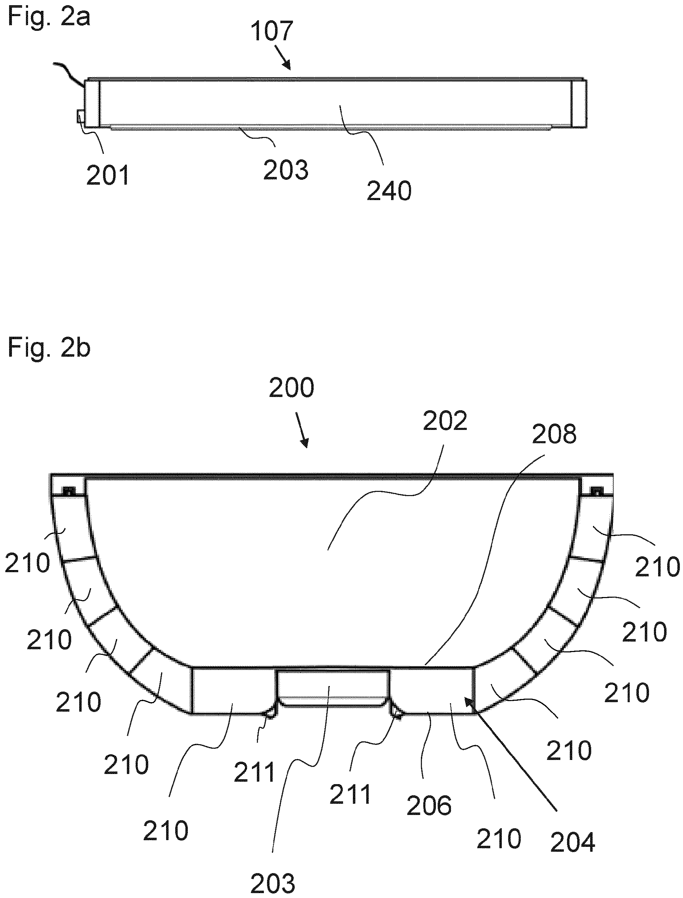

Fig. 2a shows a schematic view of an embodiment of a lighting device 107. The lighting device 107 comprises a light source 203 to provide light for plants 50 arranged below the lighting device 107. In order to cool the light source 203, the liquid working medium is guided through a docking station 201 into a fluid compartment of the lighting device 107, which runs along the length of the lighting device 107 close to the light source 203. In Fig. 2a, the fluid compartment itself is not visible, because it runs on the inside of the lighting device 107.

Fig. 2b shows a schematic cross-sectional view of an embodiment of a plant containment device 200 for vertical farming with a light source 203. The plant containment device 200 comprises a plant holding compartment 202, in which a plant 50 can be placed. The plant holding compartment 202 might be filed with soil, a substrate or just air, depending on the plant growing technique used. The plant containment device 200 further comprises an inner hull 208 and an outer hull 206, which enclose an irrigation compartment 204 between them. In the embodiment shown in Fig. 2b, the irrigation compartment is divided into a number of irrigation channels 210, which run parallel to each other along a longitudinal axis of the plant containment device 200. The liquid working or the liquid working media are guided through these irrigation channels 210. In this way, the plants 50 are supplied with water and nutrients. According to an embodiment, the liquid working medium is supplied to the roots of the plants via the nutrient film technique (NFT), where nutrients are dissolved in a shallow stream of water, which is circulated past the roots of the plants 50.

In the shown embodiment, the light source 203 is fixed to a bottom side of plant containment device 200 in between two irrigation channels 210. In this way, the light source 203 is in close thermal contact with the liquid working medium flowing through the two irrigation channels 210, so that the liquid working medium can dissipate the heat generated by the light source 203. In order to protect the light source 203 from water condensing on the outer surface of the irrigation channels 210, the plant containment device 200 comprises at least one barrier 211. The barrier 211 surrounds the bottom side of the light source 203 and thus protects it from the condensing water.

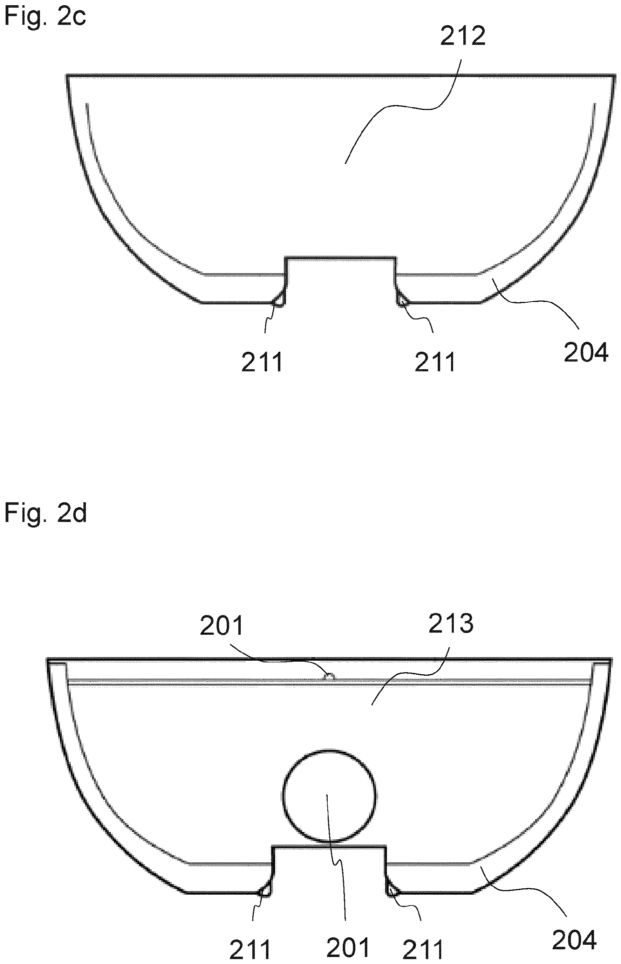

In Fig. 2c, a backside sealing 212 for the plant containment device 200 is shown. The backside sealing 212 is placed at one end of the plant containment device 200. Fig. 2d shows a front sealing 213, which is placed at the other end of the plant containment device 200. The front sealing 213 comprises one or more docking stations 201, through which the liquid working medium is supplied into the irrigation compartment 203 of the front sealing 213 and further into the irrigation channels 210 of the plant containment device 200.

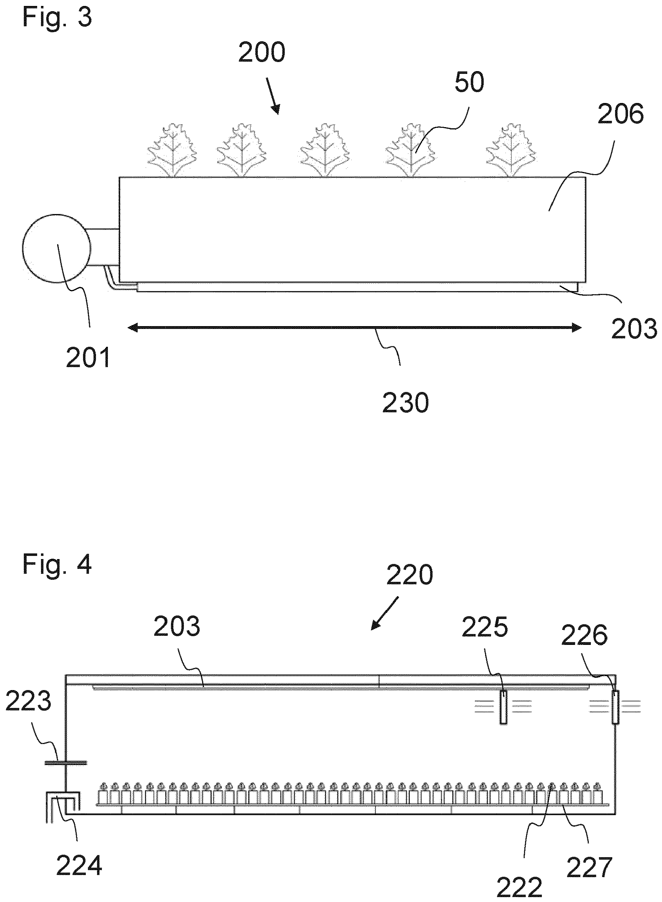

Fig. 3 shows a schematic side view of an embodiment of a plant containment device 200, in which multiple plants 50 are placed along its longitudinal axis 230. The liquid working medium is supplied through the docking station 201 into the irrigation compartment 204 of the plant containment device 200 to supply the plants 50 and cool the light source 203 arranged at the bottom of the plant containment device 200.

Fig. 4 shows a schematic view of a seedling box 220 according to an embodiment of the invention. The seedling box 220 can be arranged in the system 100 in pace of one or more of the plant containment devices 200 and comprises its own light source 203 to provide light for seedlings 222 arranged on a plateau 227 inside the seedling box 220. Through an inlet 223, a liquid working medium can be guided into the seedling box 220 to fill it with the liquid working medium to a desired level. Through an outlet 224, the liquid working medium can be drained from the seedling box 220. With the inlet 223 and the outlet 224 an ebb and flow irrigation can be realized. During an ebb and flow irrigation, the seedling 222 are submerged in the liquid working medium periodically. An internal ventilator 225 creates an airflow inside the seedling box 220 and an external ventilator 226 enables an air exchange between the inside and the outside of the seedling box 220.

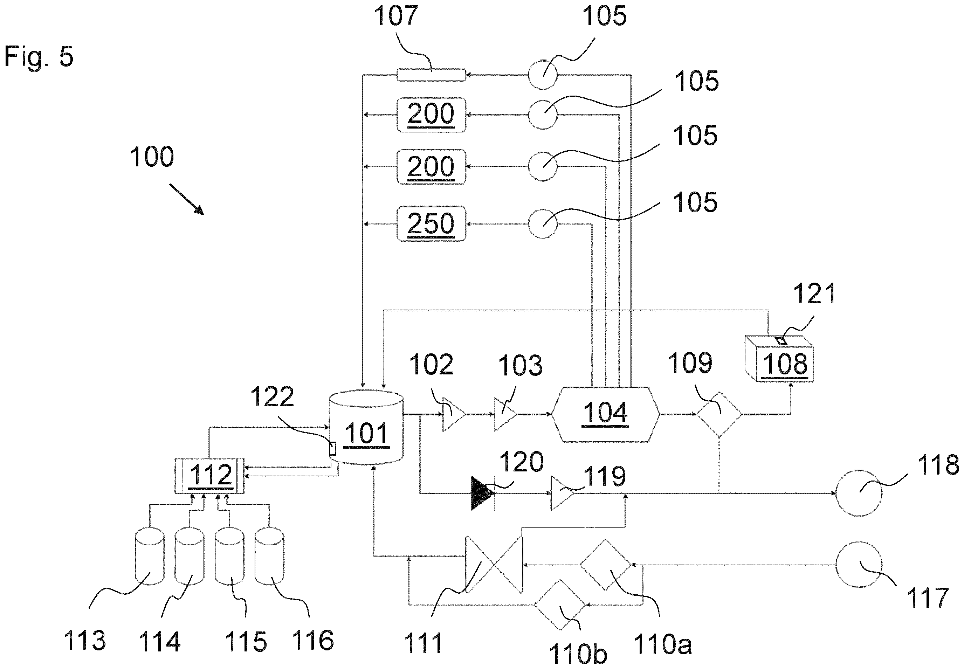

Fig. 5 shows a schematic view of an irrigation cycle and a cooling cycle of an embodiment of a plant growing system 100 for vertical farming. The plant growing system 100 comprises a reservoir 101 that stores the liquid working medium, e.g. a nutrient solution and/or water. During the operation of the system, a main pump 103 pumps the liquid working medium through a filter 102 to a distributor device 104. The distributor device 104 distributes the liquid working medium through a number of flow sensors 105 to the plant containment devices 200 with integrated light sources 203, the plant containment devices without a light source 250 and the lighting devices 107. The distributor device 104 may be equipped with manual and/or motorized ball valves as well as flow sensors to distribute and/or regulate the liquid mass flow as needed. The flow sensors 105 measure the flow rate of the liquid working medium, which allows the system 100 to regulate the flow of the liquid working medium to the individual plant containment devices 200, 250 and lighting devices 107. Inside the plant containment devices 200, 250 the liquid working medium is utilized to supply water and/or nutrients to the plants 50. Additionally, the liquid working medium cools the light sources 203 in the plant containment devices 200 and the lighting devices 107. From the plant containment devices 200, 250 and the lighting devices 107, the liquid working medium is cycled back to the reservoir 101. The reservoir 101, the filter 102, the main pump 103, the distributor device 104, the flow sensors 105, the plant containment devices 200, 250 and the lighting devices 107 form the irrigation cycle of the plant growing system 100 in the embodiment shown in Fig. 5.

The distributor device 104 also distributes the liquid working medium to a cooling device 108. The cooling device 108 regulates the liquid working media temperature in the system 100, for example to a temperature between 10°C and 30°C. The cooling device 108 is configured to cool and in particular also heat the liquid working medium. In particular, the cooling device 108 is a temperature management device or is part of a temperature management device, which might also comprise a HVAC. The cooling device 108 is in particular resistant to corrosion and comprises. In particular, the cooling device 108 at least one temperature sensor 121 to measure the temperature of the liquid cooling medium. If the measured temperature is outside a specified temperature range, the temperature is adjusted by the cooling device 108. Apart from the temperature of the liquid working medium the cooling device 108 may also be configured to control and/or regulate the temperature and/or humidity of the air inside the system 100.

From the cooling device 108, the liquid working medium is cycled back to the reservoir 101. Thus, the reservoir 101, the filter 102, the main pump 103, the distributor device 104 and the cooling block 108 form the cooling cycle in shown embodiment. The cooling cycle ensures that the temperature of the liquid working medium inside the reservoir stays at a desired level. As the volume of the liquid working medium inside the reservoir 101 is large compared to the volume of the liquid working medium inside the plant containment devices 200, 250 and lighting devices 107, fluctuations of the temperature of the liquid working medium inside the reservoir 101 are prevented. This ensures that the liquid working medium pumped to the plants 50 can carry enough oxygen to supply the plants 50. In this way, cooled water from the cooling device 108 does not need to be pumped directly to the plants.

The system 100 in Fig. 5 further comprises a water mixing device 112 with four substance containers 113, 114, 115, 116 containing chemical substances, for example a fertilizer liquid, a pH down substance, a pH up substance, a pathogen and/or a cleaner. However, the water mixing device 112 may comprise more substance containers, for example six or ten containers with different substances or different compositions of substances. The water mixing device 112 comprises liquid property sensors 122 to measure liquid properties, in particular chemical parameters, for example a pH value and/or an electric conductivity, of the liquid working medium inside the reservoir 101. If one of the measured values of the liquid properties is outside a specified range, the water mixing device 112 adds a specified quantity of at least one of the chemical substances to the liquid working medium, until the measured value of the liquid property is inside the specified range.

In order to remove waste or contaminated liquid working medium from the system 100, the system 100 comprises an outlet 118. Though a three-way valve 109 the liquid working medium can either be directed to the cooling device or flushed out of the system 100 via the outlet 118. Alternatively or additionally the system comprises a check valve 120 in combination with a waste fluid pump 119 to flush out the liquid working medium to the outlet 118. In this setup the waste fluid pump 119 may also backflush the filter 102 and can remove debris accumulated in the filter 102 out of the system via the outlet 118. When the waste fluid pump 119 is not in use, the check valve 120 prevents air getting sucked back into the main fluid flow from the main pump 103.

For refilling the system 100 with fresh water or other fluids Fig. 2 shows two options. When a two-way valve 110b is opened while another two-way valve 110a is closed, a reverse osmosis filter 111 is bypassed and the reservoir 101 fills up quickly with tap water or another fluid from an inlet 117. This is usually used for flushing or cleaning the system 100, but can also be used as the sole freshwater inlet, if tap water with a low ppm of soluble matter is available or the water is pre processed externally, for example with reverse osmosis. When normal tap water with a higher ppm of soluble matter is used, the water of fluid is guided through the reverse osmosis filter 111 by opening the two-way valve 110a and closing the two-way valve 110b. In this way, the water or fluid is cleaned and filtered before being transported to the reservoir 101. The reverse osmosis filter 101 may flush filtered-out particles out of the outlet 118.

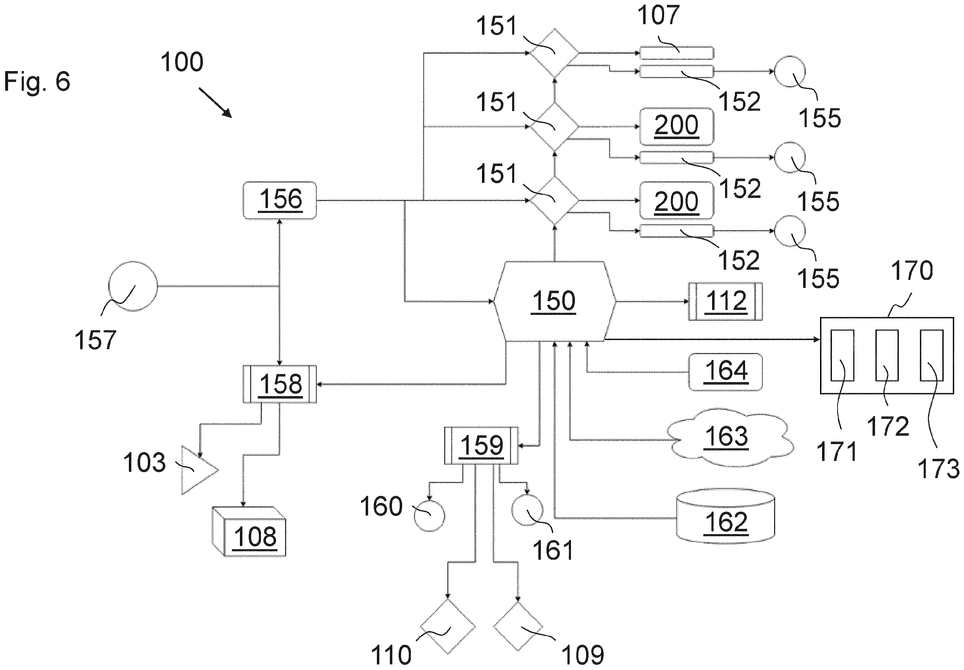

Fig. 6 shows a schematic view of an electrical system of an embodiment of a plant growing system 100 for vertical farming. The system is controlled by a master controller 150, also called main controller, hub or grow hub. The master controller 150 comprises in particular a processor, for example a microcontroller unit (MCU) or a central processing unit (CPU), which may be any type of processor based system. The master controller 150 may further comprises communication devices configured to communicate with other devices, for example via Wi-Fi and/or Bluetooth and/or radio frequency and/or near field communication, and one or more sensors. In particular the master controller 150 is configured to control and regulate the system, communicate with other devices and systems, act as an fail safe, connect to external submodules and supply electricity with a low voltage to other devices.

Power is supplied to the system in particular via a standard plug 157, for example a 230V 16A fused 50Hz EU style plug. The system 100 comprises a DC power supply 156 to power components and devices with required 24V, for example the light sources 203. Furthermore, the system 100 might comprise a AC relay board 158, which is controlled by the master controller 150 and supplies components like pumps 103, the cooling device 108 and other loads like humidifiers, air pumps and more with power. The AC relay board is galvanically isolated from the master controller 150. The light sources may also be controlled by AC/DC drivers comprising flyback converters.

According to an embodiment of the invention, multiple layers of plant containment devices 200, 250 are controlled by a single master controller 150. For each layer, the system comprises a spreader board 151, which communicates with the master controller 150 and gets powered directly by the DC power supply 156. Each spreader board 151 connects multiple devices. The devices are for example provided with a DC 24V supply voltage and a signal, e.g. a 3,3V pulse-width modulation (PWM) signal, controlled by the master controller 150. The signal can be used by one or more of the following modules:
- One or more LED drivers, which may be part of the light sources 203 of the plant containment devices 200 or the lighting devices 107, to provide each light source 203 with power and a current controlled, flicker free and high efficient dimming.
- One or more load drivers 152, which may use the PWM signal to switch an open drain mosfet for loads 155, such as fans or pumps.
- One or more high side switch drivers, which can use the PWM signal to operate a high side switch, which enables a circuit to switch a load via a positive voltage terminal and therefore avoid a floating potential in applications in the fluid cycle, for example in ultrasonic foggers in the reservoir 101.
- One or more other modules, which utilize the voltage present in a way that is controllable by the PWM signal. For example, the other modules may drive various loads or other actuators, for example valves or solenoids.

The system in Fig. 6 further includes a 12V driver board 159, which is utilized to supply a 12V voltage to fans 160, pumps 161, motorized valves, e.g. the three way valve 109, or solenoids, e.g. the two-way valves 110a, 110b. The 12V driver board 159 uses an onboard power supply for 12V on the master controller 150 to distribute the 12V voltage. Furthermore, the 12V driver board 159 uses a PWM signal to drive 12V loads with an open drain configuration or an high side switch (HSS) or any other kind of switching output like push/pull, or half/full bridges for one or more phases.

The master controller 150 may further control the water mixing device 120 and supply it with power. Sensor values for the liquid properties, e.g. the pH value and/or the electrical conductivity value, are acquired and sent to the master controller 150. An algorithm then decides what chemical substances to provide in what quantities and at which time to the reservoir 101.

The system 100 might further comprise one or more sensors 105, 162, 163, 164. One or more liquid sensors 162 acquire information about the fill level in the reservoir 101 as well as the temperature and/or other parameters of the liquid working medium. The liquid sensors 162 might include the temperature sensor 121 and/or the liquid property sensor 122. One or more air sensors 163 acquire information about the air quality and air composition as well as thermodynamic properties, for example air temperature, air humidity, air pressure, CO₂ level, a volatile organic compound (VOC) level and other parameters of the air. One or more light sensors 164 acquire information about the absolute and relative intensity as well as distribution of intensity as well as the spectral properties of the light sources 203. The light sensors 164 enable a precise control of the light in the system 100. In this way, self calibration subsystems and self diagnosis subsystems can be achieved. The aforementioned liquid flow sensors 105 acquire information about the flow rate of the liquid working medium into the different parts of the system 100 to achieve optimal liquid working medium distribution over the system 100. The system may comprise additional sensors connected to the master controller 150, for example a sensor configured to measure the oxygen saturation of the liquid working medium.

The master controller 150 further controls an autonomous actuation device 170, for example a robot 171, a conveyor 172 and/or a transfer trail 173. The autonomous actuation device 170 is configured to move the plant containment devices 200, 250 around the system, plant and harvest plants 50 and/or serve plants 50 to customers.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- 50: plant
- 100: plant growing system
- 101: reservoir
- 102: filter
- 103: pump
- 104: distributor device
- 105: flow sensor
- 107: lighting device
- 108: cooling device
- 109: three-way valve
- 110a: two-way valve
- 110b: two-way valve
- 111: reverse osmosis filter
- 112: water mixing device
- 113, 114, 115, 116: substance container
- 117: inlet
- 118: outlet
- 119: waste fluid pump
- 120: check valve
- 121: temperature sensor
- 122: liquid property sensor
- 150: Master controller
- 151: spreader board
- 152: load driver
- 155: load
- 156: DC power supply
- 157: power plug 24V
- 158: AC relay board
- 159: 12 V driver board
- 160: fan
- 161: pump
- 162: liquid sensor
- 163: air sensor
- 164: light sensor
- 170: autonomous actuation device
- 171: robot
- 172: conveyor
- 173: transfer trail
- 200: plant containment device
- 201: docking system
- 202: plant holding compartment
- 203: light source
- 204: irrigation compartment
- 206: outer hull
- 208: inner hull
- 210: irrigation channel
- 211: barrier
- 212: backside sealing
- 213: front sealing
- 214: airflow
- 215: frame
- 216: water inlet
- 220: seedling box
- 222: seedling
- 223: inlet
- 224: outlet
- 225: internal ventilation
- 226: external ventilation
- 227: plateau
- 230: longitudinal axis
- 250: plant containment without light source

## Claims

1. Plant containment device (200) for vertical farming comprising a plant holding compartment (202) to hold at least one plant (50) and an irrigation compartment (204) adjacent to the plant holding compartment (202), wherein the plant containment device (200) further comprises a light source (203), wherein the irrigation compartment (204) is configured to cool the at least one light source (203).

2. Plant containment device (200) according to claim 1, wherein the irrigation compartment (204) comprises at least one irrigation channel (210) arranged between an outer hull (206) and an inner hull (208) of the plant containment device (200).

3. Plant containment device (200) according to claim 1 or 2, wherein the irrigation compartment (204) comprises at least two irrigation channels (210), wherein the light source (203) is arranged in between two of the irrigation channels (210), wherein in particular a barrier (211) facing the light source (203) is arranged on the bottom of each of the two irrigation channels (210).

4. Plant containment device (200) according to one of the claims 1 to 3, wherein the irrigation compartment (204) comprises at least two irrigation channels (210), wherein the at least two irrigation channels (210) are separated from each other and run parallel to each other along a longitudinal axis (230) of the plant containment device (200).

5. Plant containment device (200) according to one of the claims 1 to 4, wherein the at least one light source (203) is fixed to a bottom side of the plant containment device (200), wherein in particular the at least one light source (203) only emits light away from the plant containment device (200).

6. Plant containment device (200) according to one of the claims 1 to 5 comprising a docking station (201) configured for data transfer and/or for transfer of electricity and/or as an inlet and/or outlet for at least one fluid, in particular a liquid working medium and/or water and/or air, wherein in particular the docking station (201) contains at least one valve to open and close the inlet and/or outlet for the at least one fluid.

7. Plant growing system (100) for vertical farming, comprising at least one plant containment device (200, 250), in particular according to one of the claims 1 to 6, at least one light source (203) arranged to illuminate the at least one plant containment device (200, 250), a reservoir (101) configured to hold at least one liquid working medium, at least one pump (103) and a distributor device (104), wherein the at least one pump (103) is configured to pump the liquid working medium from the reservoir (101) to the distributor device (104), from the distributor device (104) to at least one fluid compartment and from the at least one fluid compartment back to the reservoir (101), wherein at least one of the fluid compartments is an irrigation compartment (204) of the at least one plant containment device (200, 250) and at least one of the fluid compartments is configured to cool the at least one light source (203).

8. System (100) according to claim 7 comprising a cooling device (108) configured to cool the liquid working medium, wherein at least one of the pumps (103) is configured to pump the liquid working medium to the cooling device (108) and from the cooling device (108) to the reservoir (101), wherein in particular the system (100) further comprises a temperature management device and a temperature sensor (121), wherein the temperature sensor (121) is configured to measure the temperature of the liquid working medium and wherein the temperature management device is configured to receive temperature data from the temperature sensor (121) and control the cooling device (108) to regulate the temperature of the liquid working medium inside the reservoir (101) to a specified temperature.

9. System (100) according to claims 7 or 8 comprising a grow control device with a master controller (150), at least one environmental sensor (162, 163, 164) and a database with environmental data, wherein the grow control device is configured to measure a value of at least one environmental condition with the at least one environmental sensor (162, 163, 164) and control the at least one light source (203) and the distributor (104) to regulate the light, water and/or nutrients received by individual plants (50) in the at least one plant containment device (200, 250) according to a comparison of the measured value of the at least one environmental condition with the environmental data, wherein in particular the grow control device controls the at least one light source (203) and the distributor (104) according to an algorithm, which is optimized by machine learning.

10. System (100) according to one of the claims 7 to 9 comprising a water mixing device (112) connected with the reservoir (101), wherein the water mixing device (112) comprises at least one substance container (113, 114, 115, 116) and at least one liquid property sensor (122) configured to measure at least one property of the liquid working medium, in particular a pH and/or an electrical conductivity, wherein the water mixing device (112) is configured to measure a value of the at least one property of the liquid working medium with the at least one liquid property sensor (122) and add at least one substance from the at least one substance container (113, 114, 115, 116) to the liquid working medium, if the value is outside a specified range.

11. System (100) according to one of the claims 7 to 10 comprising an autonomous actuation device (170), in particular a robot (171) and/or a conveyor (172) and/or a transfer rail (173), wherein the autonomous actuation device (170) is configured to move the plant containment devices (200, 250) and/or harvest and move plants (50).

12. System (100) according to one of the claims 7 to 11 comprising a directable lighting device comprising the at least one light source (103), wherein the directable lighting device is configured to control the at least one light source (103) to illuminate at least one plant (50) in the at least one plant containment device (200, 250) with a specified light intensity and/or a specified light spectrum according to lighting data specified for the at least one plant (50) and/or at least one type of plant (50).

13. System (100) according to one of the claims 7 to 12, wherein the system (100) is configured to highlight a plant containment device (200, 250) containing plants (50), which are ready to be harvested, by individually lighting the plant containment devices (200, 250) and/or to dim a particular light source (203) when the cover covering a plant containment device (200) with the particular light source (203) and/or a lighting device (107) with the particular light source (203) is opened..

14. Method for growing plants (50) with a plant growing system (100) for vertical farming, in particular with a system (100) according to one of the claims 7 to 13, wherein a liquid working medium is guided through an irrigation compartment (204) of a plant containment device (200, 250) and wherein the same liquid working medium is guided through a fluid compartment, which is configured to cool at least one light source (203).

15. The method according to claim 14, wherein a growth of at least one of the plants (50) is controlled by an algorithm regulating the air humidity and/or air temperature and/or liquid working medium temperature and/or light intensity and/or light spectrum of an environment of the plant (50), wherein the algorithm is optimized by machine learning using feedback information, in particular the size, the weight, the appearance and/or the taste of the plant (50).
